(19) Europäisches Patentamt
European Patent Office
Office européen des brevets

(11) Publication number: **0 108 055**
**B1**

# (12) EUROPEAN PATENT SPECIFICATION

(45) Date of publication of patent specification: **05.11.86**

(51) Int. Cl.⁴: **C 08 G 81/00,** C 08 G 65/38

(21) Application number: **82901946.2**

(22) Date of filing: **13.05.82**

(86) International application number: **PCT/US82/00638**

(87) International publication number: **WO 83/04034 24.11.83 Gazette 83/27**

## (54) ARENE POLYSULFONYL HALIDE COUPLED BLOCK POLYMERS OF POLYPHENYLENE OXIDE AND AROMATIC POLYFORMALS.

(43) Date of publication of application: **16.05.84 Bulletin 84/20**

(45) Publication of the grant of the patent: **05.11.86 Bulletin 86/45**

(84) Designated Contracting States: **DE FR GB NL**

(56) References cited:
**EP-A-0 017 751**
**US-A-3 069 386**
**US-A-3 875 257**
**US-A-4 165 422**
**US-A-4 238 584**
**US-A-4 260 733**

(73) Proprietor: **GENERAL ELECTRIC COMPANY**
**1 River Road**
**Schenectady New York 12305 (US)**

(72) Inventor: **WHITE, Dwain Mongomery**
**2334 St. Joseph Drive**
**Schenectady, NY 12309 (US)**

(74) Representative: **Catherine, Alain**
**General Electric - Deutschland Munich Patent Operations Frauenstrasse 32**
**D-8000 München 5 (DE)**

**EP 0 108 055 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to arene polysulfonyl halide coupled block polymers of polyphenylene oxides and aromatic polyformals. These block polymers can be molded, calendered, or extruded as films, sheets, fibers, laminates or other useful articles of manufacture.

Bis(polyphenylene)-carbonate block copolymers having a limited carbonate segment number average molecular weights, e.g. 250 to 5500, are well known and are described in U.S.—A—3,875,256. These polyphenylene oxide aromatic carbonate block copolymers are formed by the reaction of carbonyl halides or bis-haloformates e.g. phosgene or bis-chloroformate, respectively, with polyphenylene oxide in the presence of a hydrogen halide acceptor e.g., an alkali metal hydroxide, an alkaline earth metal hydroxide or oxide or a tertiary amine.

Polyphenylene oxides having an average hydroxyl group per molecule of 1.0 or less, are described in U.S. Patents 3,306,879; 3,914,266; 4,028,341, and polyphenylene oxides having an averge hydroxyl group per molecule greater than zero including 2.0 or less are described in U.S.—A—4,140,675 and 4,234,706 among others.

Polyformals are described in U.S.—A—3,069,386 and DE—OS—2 819582.

This invention embodies arene polysulfonyl halide coupled block polymers of polyphenylene oxides and aromatic polyformals.

In general, illustrative of the broad group of block polymers included within the scope of this invention are those described among others by the following model structures.

(I linear) AZC, BZC, AZCZA, AZCZB, BZGZB, AZCZBZCZA, AZCZBZCZCZB.

The above illustrative linear combinations of polyphenylene oxide and aromatic polyformals including random and/or alternating arrangements of polymer units defined by the units A, B, C, or coupling agent Z, which units and coupling agents are described in greater detail hereafter and are not intended to limit the combinations that can be obtained by the practice of this invention since the block polymer combinations of this invention are limited only by the amount of block polymer precursors charged to the reaction medium in carrying out the process of this invention.

The expression polyphenylene oxides includes "monofunctional polyphenylene oxides" well known to those skilled in the art having an average hydroxyl group per molecule value greater than zero including 1.0 or less. These polyphenylene oxides can be prepared by any of the methods of the prior art, and can be illustrated by the formula (II) set out hereafter:

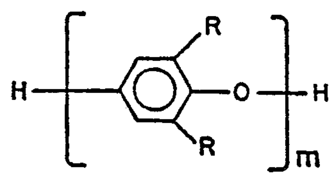

(II)

wherein independently each R is hydrogen, a hydrocarbon radical, a halohydrocarbon radical, a hydrocarbonoxy radical or a halohydrocarbonoxy radical, m is a number of at least 10, and more preferably 40 to 170. The monofunctional polyphenylene oxide units of the block polymers can be conceptualized by the structure of formula (II) above wherein the hydrogen atom is disassociated from the monohydroxy group of the polyphenylene oxide, i.e., a phenoxy radical, which may be referred to as a monovalent phenoxy radical, abbreviated herein by the formula —A.

The expression "polyphenylene oxide" also includes "polyfunctional polyphenylene oxides" also well known to those skilled in the art including quinone-coupled polyphenylene oxides having an average hydroxyl group per molecule greater than zero including 2.0 or less. These polyphenylene oxides can be prepared by the methods described in U.S. 4,234,706 and can be illustrated by formula (III) set out hereafter:

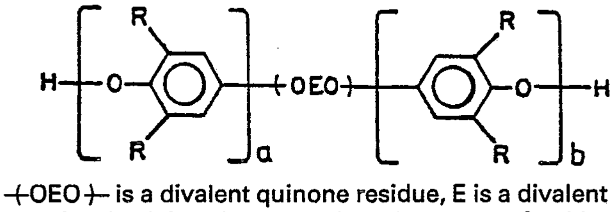

(III)

wherein independently $-(OEO)-$ is a divalent quinone residue, E is a divalent arene radical, either a or b is at least equal to 1, the sum of a plus b is at least equal to 10, more preferably 40 to 170, R is the same as in formula (II) above. The polyfunctional polyphenylene oxide units of the block polymers can be conceptualized by the structure of formula (III) above wherein the hydrogen atoms are disassociated from the hydroxy groups of the quinone-coupled polyphenylene oxide, i.e., a quinone-coupled polyphenoxy radical, which may be referred to as a divalent phenoxy radical, abbreviated herein by the formula —B—.

The expression "aromatic polyformals" as employed herein and in the claims includes any polyformals having an aromatic ring directly bonded to an oxymethylene segment of the aromatic

polyformal. These aromatic polyformals can be prepared by the methods described in DE—OS—2 819 582 and can be illustrated by formula (IV) set out hereinafter:

$$H{-}\left[ OR'OCH_2 \right]_n{-}OR'OH \qquad (IV)$$

wherein n is an integer from 10 to 170, and R′ is a divalent aromatic radical. The aromatic polyformals of the block polymers can be conceptualized by the structure of formula (IV) wherein the hydrogen atoms are disassociated from the hydroxyl groups associated with the aromatic polyformals, which may be referred to herein as divalent aromatic polyformals radical abbreviated herein by the formula —C—.

Although in formula (IV) above the R′ is broadly defined as a divalent aromatic organic radical the term "aromatic" as used herein and in the claims includes any of the well known $C_{(6-25)}$ divalent aromatic radicals, e.g. phenylene, tolylene, xylene, naphthalene; halogenated derivatives of such divalent aromatic hydrocarbon radicals, such as chlorophenylene, bromotolylene, etc., divalent radicals, such as —R″QR″—, wherein R″ is selected from $C_{(6-13)}$ divalent aromatic radicals, wherein Q can be cyclohexyl, fluorenyl,

—O—, —S—, 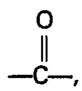, 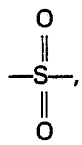, $-C_yH_{2y}-$, y being equal to 1 to 5 inclusive, 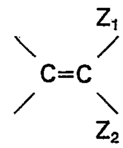,

$Z_1$ is selected from hydrogen, chlorine or bromine, $Z_2$ is selected from chlorine or bromine.

The expression "coupling agents" as employed herein and in the claims include "arene polysulfonyl halides, e.g. any arene disulfonyl halide having at least two sulfonyl halide coupling reaction sites. These arene polysulfonyl halides can be illustrated by formula (V) set out hereinafter:

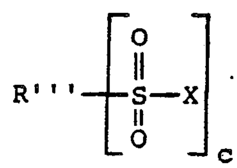

(V)

wherein c is a number at least equal to 2, Z is a halogen, e.g., fluorine, chlorine, bromine or iodine, preferably chlorine, and R‴ is phenylene, biphenyle, i.e.,

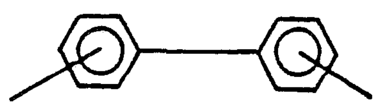

e.g., 2,2′-, 2,3′-, 2,4′-, 3,4′- and 4,4′- biphenylene; bis(phenylene)-$C_{1-8}$ alkane, i.e.,

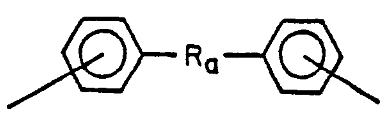

where Ra is $C_{1-8}$ alkylene or alkylidene, e.g., methylene, ethylidene, isopropylidene, butylidene, ethylene, propylene, isopropylene, the various pentylenes, the various hexylenes (including cyclohexylenes) phenylene, biphenylene; biphenylene oxide, i.e.,

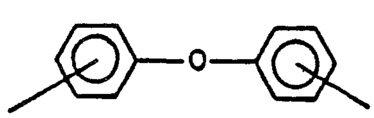

poly($C_{2-8}$ oxyalkylene), having an average of 2 to 10 repeating units, i.e., $-O{-}(R_b{-}O){-}_p$ where p is 2—10 and $R_b$ is alkylene, examples of which are given above for $R_a$, and the above mentioned groups containing a phenylene or biphenylene group, e.g., the various phenylenes, biphenylenes, bis(phenylene)-$C_{1-8}$ alkanes, and (bisphenylene) oxides wherein one up to the total number of aromatic hydrogens have been replaced

with halogen, preferably chlorine, and/or $C_{1-8}$ alkyl groups.

Illustrative of a portion of preferably preferred aryl sulfonyl halides are the following:

1,4-benzene disulfonyl dichloride also commonly referred to as
1,4-benzene disulfonyl chloride,
1,3-benzene disulfonyl dichloride,
4,4'-biphenyl disulfonyl dichloride,
3,3'-biphenyl disulfonyl dichloride,
1,5-naphthalene disulfonyl dichloride,
4,4'-diphenylether disulfonyl dichloride,
2,4-toluene disulfonyl dichloride, and
1,3,5-benzene trisulfonyl trichloride.

The most preferred aryl disulfonyl halides are unsubstituted and have two sulfonyl chloride substituents, e.g. benzene disulfonyl dichloride and biphenyl disulfonyl dichloride.

In general, the process of preparing the coupled-block copolymers comprises contacting mono and/or polyfunctional polyphenylene oxides, aromatic polyformal block copolymers and arene polysulfonyl halide coupling agents in the presence of an aqueous solution of a water soluble base and a catalytic phase transfer agent.

Presently, the process is preferably carried out by introducing a coupling agent to a solution of a polyphenylene oxide and an aromatic polyformal under fluid mixing conditions wherein the liquid reaction medium experiences high fluid shear stress since the process is highly sensitive to the dispersion of the reactants. In a presently more preferred embodiment, the coupling reaction is carried out while introducing the coupling agent to a solution of polyphenylene oxide and aromatic polyformal solution at a point or region within a reaction environment near a mixing impeller, e.g., an axial-flow or radial flow impeller, such as a marine-type mixing propeller, fan turbine, pitched paddle, curved blade turbine, spiral backswept turbine, flat-blade turbine, gas impeller, anchor impeller, etc., in order to establish and maintain high fluid shear rates and accordingly relatedly high fluid shear stresses. The addition of coupling agent under the aforesaid process conditions facilitates the establishment and maintenace of a substantially uniform dispersion of reactants coupling agents, polyphenylene oxide, aromatic polyformal, water soluble base, and catalytic phase transfer agent, and accordingly optimum process efficiency. In general, process equipment employing high-speed axial-flow impeller mixers are presently preferred in the process.

Advantageously and preferably, the process is carried out employing substantially the exact stoichiometric amounts of coupling agent required to completely couple essentially all of the hydroxyl components associated with the polyphenylene oxide and aromatic polyformal reactants. Preferably, the coupling agent is added to the reaction medium continuously during the course of the reaction so that the exact stoichiometric coupling agent requirement for completion of the coupling agent reaction are only satisfied as the last portion of coupling agent is added to the reaction medium.

In a preferred embodiment, the process is carried out in the substantial absence of any solvolyzing agent, e.g., methanol, etc., or any other chemical constituents which can promote undesirable side reactions, e.g., primary or secondary amines. Accordingly, it is highly desirable that individually and preferably collectively any potential solvolyzing agent content be limited to less than 1%, and more preferably less than 1/2% based on the weight of polyphenylene oxide and aromatic polyformal reactant.

Any water soluble base can be employed, however, preferably in an aqueous solution of a water soluble base, e.g., an aqueous alkaline metal or alkaline earth metal hydroxide or carbonate solution. Specific examples include aqueous solutions of potassium hydroxide, sodium hydroxide, sodium monocarbonate, barium carbonate, etc. Any amount of water soluble base can be employed. Generally effective mole proportions of water soluble base relative to the amount of coupling agent that are employed are coupling agent:water soluble base proportions of from about 1:100 to about 50:1 and more frequently from about 1:10 to about 10:1.

Any catalytic phase transfer agent can be employed, however, preferably is a phase transfer agent selected from the group consisting of quaternary ammonium, quaternary phosphonium, and tertiary sulfonium compounds or mixtures thereof. These phase transfer agents are well known and include illustratively "onium compounds" described by C.M. Starks in J.A.C.S. 93, 195 (1971), "crown ethers" described in Aldrichimica ACTA 9, Issue #1 (1976) Crown Ether Chemistry-Principles and Applications, G. W. Gokel and H. D. Durst, as well as in U.S. Pat. No. 3,622,577 and "chelated cationic salts" which include alkali or alkaline earth metal diamine halides. Specific illustrative examples are described in U.S. 4,201,721.

Any amount of catalytic phase transfer agent can be employed, however, generally effective molar proportions of phase transfer agent relative to the amount of water soluble base are within the range of from about 1:10 to about 1:1000 and more frequently within the range of from 1:50 to 1:500.

The coupling reactions can be carried out at any temperature. Preferably temperatures within the range of from 0° to 150°C or even higher, and more preferably from 50°C to 100°C are employed.

In order that those skilled in the art may better understand our invention, the following examples are given which illustrate the best mode of practising our invention.

## Example 1

(A) Preparation of Polyphenylene Oxide

2.6 xylenol was polymerized in accordance with the following procedure:

A 11 l (2.5 gallon) stainless steel reactor equipped with an air-driven paddle stirrer, oxygen inlet tube, and water-cooled coil and jacket was charged with 3.4:1 toluene, 150 g 2,6-xylenol, 101 ml of a stock catalyst solution, i.e., (29.5 ml bromine added slowly to a chilled solution of 7.76 g cuprous oxide and 132.0 g 2,6-xylenol in methanol, then diluted to 1.0 l), 3.67 g N,N'-di(t-butyl)ethylene-diamine (DBEDA), 85.4 g N.N-dimethylbutylamine (DMBA), 15 g di(n-butyl) amine (DBA) and 1.5 g tricaprylmonomethylammonium chloride (Adogen 464). Oxygen was bubbled into the resulting admixture at a rate of 141.5 l/h (5 SCFH) while vigorously agitating the admixture, 1350 g of 2,6 xylenol dissolved in 1.4 l toluene was pumped into the reactor over a 30 minute period. The temperature rose from 25° to 35° and was held at 35°C. The polymerization reaction was terminated by adding 15 ml 38% trisodium ethylenediaminetetraacetate ($Na_3EDTA$) in water. The resulting reaction mixture was heated at 55°C under nitrogen for one hour and then the polymer was precipitated by adding three volumes of methanol. The precipitated polymer was filtered and washed with methanol (5 l) yielding a white solid reaction product having an intrinsic viscosity of 0.24 dl/g measured in chloroform at 25°C. An infrared spectrum of the polymer showed a peak with an absorbance at 3610 $cm^{-1}$ of 0.40 when measured in carbon disulfide at 2.5 percent concentration in a 1.00 cm path length cell.

(B) Preparation of Aromatic Polyformal

A solution of 45.6 parts (0.20 mole) of bisphenol-A in 62 ml of methylene chloride and 93 ml of N-methyl-pyrrolidine (NMP) was stirred vigorously under a nitrogen atmosphere with 16.0 parts (0.50 mole) sodium hydroxide pellets at 80°C for 5 hours. Additional methylene chloride was added and the mixture was filtered while warm. A mixture of 250 ml methanol and 250 ml acetone was added to the filtrate to precipitate the polymer. The polymer was collected on a filter and dried at 60°C and 1333Pa (10 Torr) for 20 hours. The weight of dry polymer was 35.8 g.

The polymer was found to have an intrinsic viscosity of 0.21 dl/g in chloroform at 25°C. The number average molecular weight ($\overline{M}n$) from infrared analysis of hydroxyl end groups was 8150. Using either less sodium hydroxide or less methylene chloride with a similar procedure yielded lower molecular weight polyformal. Thus, with 5% less sodium hydroxide, the polymer had an intrinsic viscosity of 0.08 dl/g in chloroform at 25°C, a $\overline{M}n$ of 2560 and a Tg of 52°C. with 70% less methylene chloride. The polymer had an intrinsic viscosity of 0.13 dl/g and $\overline{M}n$ of 3770.

## Example 2

An aryl disulfonyl halide coupled-block polymer of polyphenylene oxide and an aromatic polyformal was prepared utilizing the polyphenylene oxide and the polyformal precursors prepared as described in Example 1 above.

A 300 ml mini-blender was equipped with a nitrogen inlet, a thermocouple near the high shear impeller region of the blender and a port for the introduction of a coupling agent. The blender was charged with a 3.0 g polyphenylene oxide (PPO) resin, 3.0 g bis-phenol-A polyformal, 18 ml of chlorobenzene, 0.5 ml of a 10% (w/v) solution of Aliquat 336(TM) methyltricapryl-ammonium chloride) in chlorobenzene, and 0.60 g of 50% aqueous sodium hydroxide. The reaction medium was maintained under an inert nitrogen atmosphere at a temperature of approximately 50°C while the reaction ingredients were premixed vigorously for 2 minutes. 4,4'-biphenylene disufonyl chloride (BPSC) was then added. Within 2 minutes a viscous reaction mixture resulted which was diluted with *20* ml of chlorobenzene, and added to *300* milliliters of methanol with vigorous stirring. A resulting solid precipitate was filtered, washed with methanol dried at 80°C for 20 hours under a vacuum of (10 Torr) 1333Pa.

Set out in Table I hereinafter is a summary of the reaction parameters including the relative amounts of polyphenylene oxide, polyformal, biphenylene disulfonyl chloride, phase transfer agent, base and solvent employed in this example as well as the amount and the intrinsic viscosity of the resulting product.

TABLE I

| Example | Reaction No. | PPO (g.) | PPO [η] | PF (g.) | PF [η] | PF [$\overline{M}n$] | Aliquat (g) | 50% NaOH (g) | ΦCl (ml) | BPSC (g) | PPO-PF (g) | PPO-PF (η) | PPO-PF $T_g$ |
|---|---|---|---|---|---|---|---|---|---|---|---|---|---|
| 2 | 1 | 3 | 0.24 | 3 | 0.21 | 8100 | 0.03 | 0.60 | 18 | 1.04 | 5.74 | 0.77 | — |

Although the above example is directed to only a few of the many variables which can be employed in the practice of the present invention, it should be understood that the present invention is directed to a much broader class of arene polysulfonyl halide coupled block polymers of polyphenyle oxide and polyformals consisting essentially of chemically arene disulfonyl coupled units of polyphenylene oxides of

formulas (II) and/or (III) and aromatic polyformals of formula (IV). The arene polysulfonyl halide coupled block copolymers of polythenylene oxide and aromatic polyformals can be molded, calendered, or extruded as films, sheets, fiber, laminates, or other useful articles of manufacture.

## Claims

1. An arene polysulfonyl halide coupled polyphenylene oxide aromatic polyformal block copolymer comprising an arene sulfonyl radical of the formula:

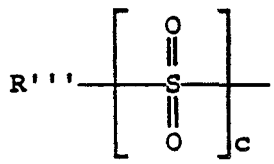

wherein c is a number at least equal to 2, and R''' is selected from phenylene, biphenyle, bis(phenylene)-$C_{1-8}$ alkane, bisphenyle oxide, and poly($C_{2-8}$ oxyalkylene) having an average of 2 to 10 repeating units; a polyphenylene oxide radical of the formula:

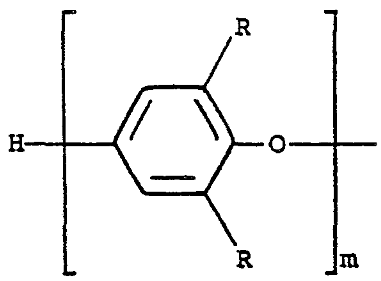

wherein independently each R is hydrogen, a hydrocarbon radical, a halohydrocarbon radical, a hydroxycarbonoxy radical or a halohydrocarbonoxy radical, m is a number of at least 10, or

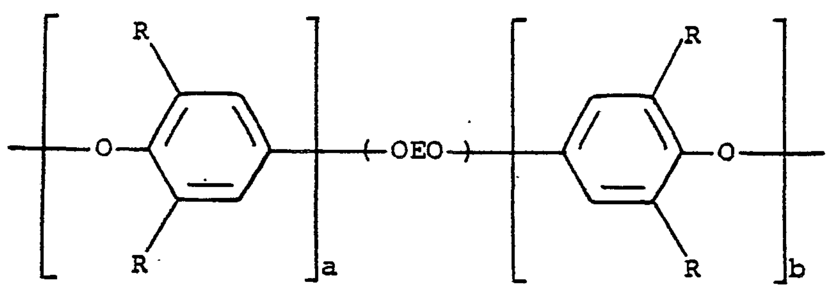

wherein independent each $-(OEO)-$ is a divalent quinone residue, E is a divalent arene radical, either a or b is at least equal to 1, the sum of plus b is at least equal to 10, R is the same as above, and an aromatic polyformal radical of the formula:

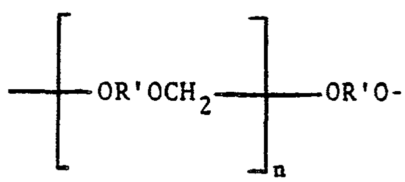

wherein n is an integer from 10 to 170 and R' is a divalent aromatic radical.

2. The claim 1 copolymer where c is equal to 2, m is 40 to 170, the sum of a plus b is 40 to 170.

3. A process of forming an arene polysulfonyl halide coupled polyphenyle oxide aromatic polyformal copolymer comprising contacting a polyphenylene oxide, a polyformal and an arene polysulfonyl halide coupling agent in the presence of an aqueous solution of a water base and a catalytic phase transfer agent.

**Patentansprüche**

1. Aren-Polysulfonyl-Halid-gekuppeltes Polyphenylenoxid-aromatisches-Polyformal-Blochcopolymeres, dadurch gekennzeichnet, daß es einen Aren-sulfonylrest der nachfolgenden allgemeinen Formel

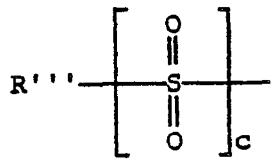

in welcher c eine Zahl mit einen Wert von zumindest 2 bedeutet und R''' aus Phenylen, Biphenylen, Bis(phenylen)-$C_{1-8}$-Alkan, Biphenylenoxid und Poly($C_{2-8}$-oxyalkylen) mit einem Durchschnitt von 2 bis 10 wiederkehrenden Einheiten ausgewählt ist; einen Polyphenylenoxid-Rest der nachfolgenden allgemeinen Formel

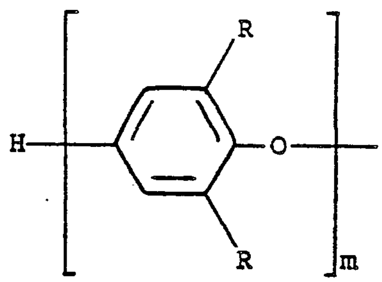

worin, unabhängig, jeder Rest R Wasserstoff, ein Kohlenwassertoffrest, ein Halogenkohlenwasserstoff-Rest, ein Hydroxy-carbonoxy-Rest oder ein Halogenhydrocarbonoxy-Rest ist, m eine Zahl mit einem Wert von zumindest 10 bedeutet, oder

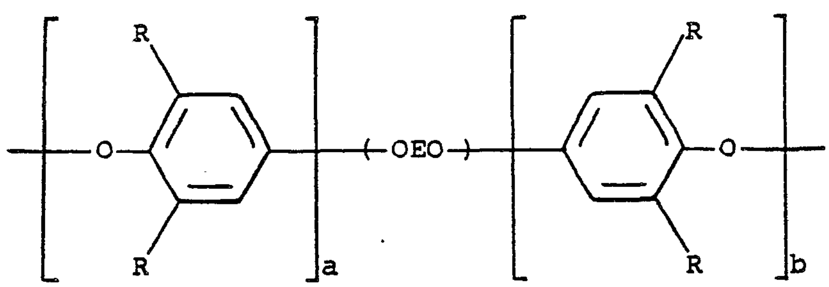

worin, unabhängig, jeder Rest $-(OEO)-$ ein zweiwertiger Chinonrest ist, E einen zweitertigen Arenrest bedeutet, entweder a oder b zumindest den Wert von 1 besitzt, die Summe von a + b zumindest gleich 10 ist, R die gleiche Bedeutung wie oben besitzt, und einen aromatischen Polyformal-Rest der nachfolgenden Formel

$$-(OR'OCH_2)_n-OR'O-$$

enthält, in welcher der Index n eine ganze Zahl mit einem Wert von 10 bis 170 und R' einen zweiwertigen aromatischen Rest bedeutet.

2. Das Copolymere nach Anspruch 1, dadurch gekennzeichnet, daß c einen Wert von 2, der Index m einen Wert von 40 bis 170, und die Summe von (a+b) einen Wert von 40 bis 170 hat.

3. Verfahren zur Herstellung eines Aren-Polysulfonyl-Halid-gekuppelten Polyphenylenoxidaromatischen-Polyformal-Copolymeren, dadurch gekennzeichnet, daß es das In-Kontakt-bringen eines Polyphenylenoxids, eines Poly-formals und eines Aren-Polysulfonyl-Halid-Kupplungsmittels in Gegenwart einer wässerigen Lösung einer wasserlöslichen Base und eines katalytischen Phasentransfermittels umfaßt.

**Revendications**

1. Copolymère séquencé polyoxyphénylène-polyformal aromatique couplé par un halogénure d'arènepolysulfonyle comprenant un radical arènesulfonyle répondant à la formule:

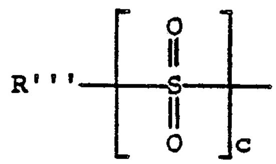

dans laquelle c représente un nombre au moins égal à 2, et R''' est choisi parmi les groupes phénylène, biphénylène, bis(phénylène) alcane en $C_{1-8}$, oxyde de bisphénylène et poly(oxyalkylène en $C_{2-8}$) contenant une moyenne de 2 à 10 motifs répétés; un radical polyoxyhénylène répondant à la formule:

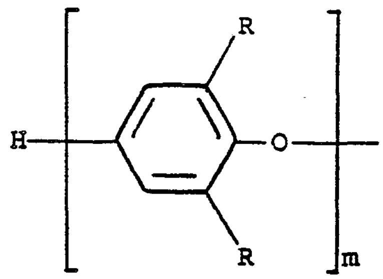

dans laquelle chacun des groupes R représentent indépendamment l'hydrogène, un radical hydrocarboné, un radical hydrocarboné halogéné, un radical oxyhydrocarboné ou un radical oxyhydrocarboné halogéné, m représente un nombre au moins égal à 10 ou

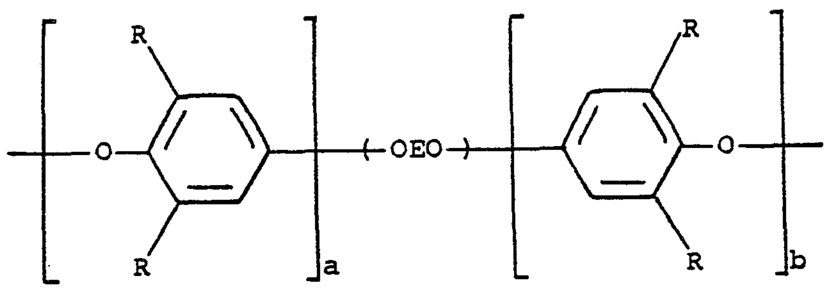

sachant que chacun des groupes $-(OEO)-$ représente indépendamment un reste quinone divalent, E représente un radical arène divalent, a ou b est au moins égal à 1, la somme de a et de b est au moins égale à 10, R est tel qu'on l'a défini plus haut; et un radical polyformal aromatique répondant à la formule:

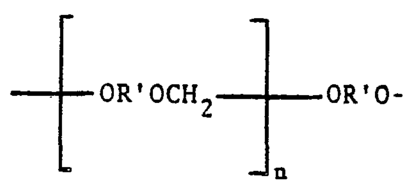

dans laquelle n représente un nombre entier compris entre 10 et 170 et R' représente un radical aromatique divalent.

2. Copolymère selon la revendication 1, dans lequel c est égal à 2, m est compris entre 40 et 170, et la somme de a et de b est comprise entre 40 et 170.

3. Procédé de formation d'un copolymère polyoxy-phénylène-polyformal aromatique couplé par un halogénure d'arènepolysulfonyle comprenant la mise en contact d'un polyoxyphénylène, d'un polyformal et d'un halogénure d'arènepolysulfonyle utilisé comme agent de couplage en présence d'une solution aqueuse d'une base soluble dans l'eau et d'un agent de transfert de phase catalytique.